# EUROPEAN PATENT SPECIFICATION

(11) **EP 2 607 183 B1**
(45) Date of publication and mention of the grant of the patent: **08.04.2015**
(21) Application number: 11194332.0
(22) Date of filing: 19.12.2011
(51) Int. Cl.: B60R 21/36

(54) **An inflatable airbag for a motor vehicle safety arrangement**
Aufblasbarer Airbag für Sicherheitseinrichtung eines Kraftfahrzeugs
Airbag gonflable pour agencement de sécurité de véhicule à moteur

(43) Date of publication of application: 26.06.2013
(73) Proprietor: Autoliv Development AB, 447 83 Vårgårda (SE)
(72) Inventor: Ewert, Jochen, 85221 Dachau (DE); Zauritz, Ralf, D-83607 Holzkirchen (DE); Pucher, Florian, D-85445 Aufkirchen (DE)
(74) Representative: Parry, Simon James

(56) References cited:
- EP-A2- 1 577 172
- US-A1- 2007 013 173
- US-B1- 8 016 066

## Description

The present invention relates to an inflatable airbag for a motor vehicle safety arrangement.

Inflatable airbags are commonly provided for deployment both inside the passenger compartment (to provide protection to occupants) and outside motor vehicles (to provide protection to pedestrians or cyclists). Such airbags can take a very wide range of different forms and can have many different configurations when inflated upon deployment, depending upon their particular function.

It has been proposed previously to provide airbags which are arranged to adopt an inflated configuration upon deployment which defines a cavity directed towards the adjacent part of the motor vehicle over or across which the airbag is arranged to deploy. Typically, airbags of this sort rely on the use of external tether arrangements to manipulate the airbag into a configuration defining the cavity as it inflates. The provision of such tether arrangements often involves the connection of separate straps to the fabric of an airbag, and this adds to the complexity and expense of producing such an airbag arrangement.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted by a suitable air-bag, piston or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet. As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian. For these reasons, pedestrian airbags which are configured to define a cavity between the airbag and the windscreen upon deployment have been found to be particularly advantageous. The creation of such a cavity increases the protective effect of a pedestrian airbag for any given inflatable volume.

It is a preferred object of the present invention to provide an improved inflatable airbag for a motor vehicle safety arrangement.

It is another preferred object of the present invention to provide an improved pedestrian airbag arrangement on a motor vehicle having a windscreen.

The document US 2007/0013173 discloses an airbag according to the preamble of claim 1.

According to a first aspect of the present invention, there is provided an inflatable airbag for a motor vehicle safety arrangement, the airbag having: two layers of flexible material interconnected to define an inflatable volume between the layers for the receipt of inflating gas; and a tether outside said inflatable volume and which extends between two points on the airbag, said points being spaced from one another across a region of the inflatable volume; the tether being configured to become tensioned between said points upon deployment of the airbag to thereby control inflation of the airbag such that the airbag adopts an inflated configuration defining a cavity; the airbag being characterised in that said tether is formed as a cut-out from an interconnected region of said layers of the airbag, the tether having a length which is shorter than the length of the interconnected region from which it is cut and thereby being configured to become tensioned between opposite ends of the interconnected region.

Preferably, said interconnected region of said layers is provided within the periphery of said inflatable volume.

Advantageously, said layers are superimposed and stitched together in said interconnected region.

Conveniently, said layers are fabric and are each woven from respective yarns; yarns of one layer being interwoven with yarns of the other layer in said interconnected region. Preferably, said inflatable volume is defined by a peripheral seam created by interweaving yarns of one said layer with yarns of the other said layer.

Advantageously, said interconnected region and said peripheral seam are both formed via a one-piece-weaving technique in which the two layers of the airbag are woven simultaneously.

Conveniently, said tether is formed as a single piece cut out from said interconnected region of the layers.

Preferably, said tether has a stitched-fold formed in said piece cut out from the interconnected region of the layers.

Advantageously, said tether is formed from a pair of pieces cut from respective spaced-apart positions within said interconnected region, said pieces being fixedly connected to one another.

Conveniently, the airbag has a plurality of said tethers.

Preferably, the airbag has a pair of said tethers, the tethers being connected to one another.

According to another aspect of the present invention, there is provided a pedestrian airbag arrangement on a motor vehicle having a windscreen, the arrangement having an airbag of the type defined above and which is configured for said deployment upon inflation so as to extend over or across at least part of the windscreen, wherein said tether is configured to control inflation of the airbag such that said cavity is directed towards the windscreen.

Preferably, said cavity is defined between the airbag and the windscreen.

Advantageously, the arrangement comprises an additional tether outside the inflatable volume of the airbag, the additional tether being fixedly connected between the airbag and an anchorage which is fixed relative to part of the motor vehicle adjacent the windscreen.

Conveniently, said additional tether is configured to become tensioned between said anchorage and said airbag upon said deployment of the airbag to thereby control inflation of the airbag such that the airbag adopts an inflated configuration defining a cavity between the airbag and the windscreen.

Preferably, said additional tether is configured to control inflation of the airbag upon deployment such that a distal region of the inflated airbag remote from the anchorage is urged against said windscreen by the tension in the additional tether

Advantageously, said cavity is defined between said distal region of the airbag and said anchorage.

Conveniently, the anchorage is mounted to, or is formed integral with part of the hood or bonnet of the motor vehicle.

Preferably, said part of the hood or bonnet is a rear part of the hood or bonnet adjacent the bottom region of the windscreen.

Preferably, said airbag is configured such that upon inflation a proximal region of the airbag adjacent said anchorage is also urged against said windscreen such that said cavity is defined between said distal and proximal regions.

Advantageously, the inflatable volume of the airbag comprises a plurality of discrete but fluidly connected chambers.

Conveniently, said distal region of the airbag is defined by one of said chambers.

Preferably, said proximal region of the airbag is defined by another of said chambers.

Advantageously, said airbag comprises at least one intermediate chamber between said distal and proximal chambers, the or each said intermediate chamber being spaced from said windscreen by said cavity upon deployment of the airbag.

Preferably, the arrangement comprises an airbag housing within which the airbag is packaged for deployment from the housing upon inflation, the housing defining said anchorage and thus being fixed relative to said part of the motor vehicle and being fixedly connected to said additional tether.

Conveniently, said housing has an opening through which said airbag deploys upon inflation, and said additional tether is connected to the housing at a position between the opening and the windscreen of the vehicle.

Preferably, the additional tether comprises at least one flexible strap, the strap being elongate and having a first end connected to the anchorage and a second end connected to the airbag.

Advantageously, the pedestrian safety arrangement of the present invention is provided on a motor vehicle having a hood-lifting pedestrian safety device.

So that the invention may be more readily understood, and so that further features thereof may be appreciated, embodiments of the invention will now be described by way of example with reference to the accompanying drawings in which:
Figure 1 is schematic illustration of a basic form of airbag in accordance with the present invention:
Figure 2 is an enlarged view of part of the airbag shown in figure 2;
Figure 3 is a perspective view showing part of the airbag after creation of an external tether;
Figure 4 is a schematic illustration showing the manner in which the tether is created;
Figure 5 is a schematic longitudinal cross-sectional view through part of a motor vehicle fitted with a pedestrian airbag incorporating an airbag in accordance with the present invention;
Figure 6 is a schematic illustration showing the airbag in a deployed condition in which it extends generally across the windscreen of the motor vehicle, but with a cavity formed between part of the inflated airbag and the windscreen;
Figure 7 is a cross-sectional view, similar to that of figure 5, showing the deployed airbag of figure 6;
Figures 8(a) and 8(b) are related schematic illustrations showing the tether and its function in more detail;
Figures 9(a) and 9(b) are related schematic illustrations similar to those of figures 8(a) and 8(b) but which show a tether in accordance with another embodiment;
Figures 10(a) and 10(b) are related schematic illustrations similar to those of figures 8(a) and 8(b) but which show another form of tether in accordance with the present invention;
Figure 11 is a schematic illustration, generally similar to that of figure 1, but which shows an alternative configuration of airbag embodying the present invention;
Figure 12 is a cross-sectional view, similar to that of figure 7, but which shows the airbag of figure 11 in its deployed configuration;
Figure 13 is a part sectional perspective view showing the deployed airbag of figure 12;
Figure 14 is schematic illustration, similar to that of figure 11, but which shows another alternative configuration of airbag embodying the present invention;
Figure 15 is a cross-sectional view showing the airbag of figure 14 in its deployed configuration;
Figure 16 is a schematic illustration showing another alternative configuration of airbag embodying the invention; and
Figure 17 is a cross-sectional view showing the airbag of figure 16 in its deployed configuration.

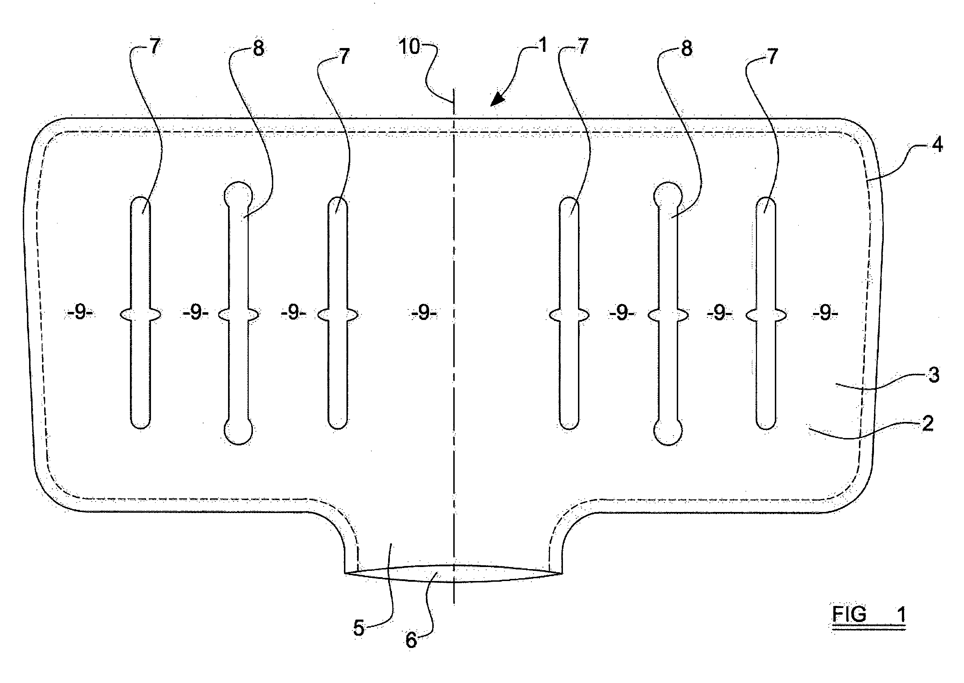

Referring initially to figure 1, there is shown an airbag 1 in accordance with the present invention which is suitable for use in a pedestrian airbag arrangement. The airbag 1 illustrated is shown in a basic form to illustrate clearly the general concept of the invention. However, as will be explained in more detail below, other more complex airbag configurations may be used instead.

The airbag 1 may be formed from two substantially identical rectangular sheets 2, 3 of flexible material, such as woven fabric, which are superimposed on one another and interconnected around their aligned edges by a peripheral stitched seam 4 to define a large internal inflatable volume between the sheets for the receipt of inflating gas from an inflator such as a gas generator. The airbag is formed so as to have an open neck region 5 defining a gas inlet aperture 6 for connection to the inflator.

As will be appreciated by those of skill in the art of airbag manufacture, although the airbag 1 has been described above as being formed from two separate sheets 2, 3 of flexible material interconnected by a stitched seam, it is envisaged that other embodiments of the airbag could be formed from a single sheet of flexible material, the sheet being folded in half to create two superimposed layers 2, 3 which can then be interconnected by a peripheral seam in an otherwise similar manner to that described above with reference to figure 1.

However, it is presently proposed that preferred embodiments of the airbag will instead be formed by simultaneously weaving the two layers 2, 3 via a so-called "one-piece weaving" technique, which is known *per se* in the field of airbag manufacture. In such an arrangement, the two layers 2, 3 are each woven from respective sets of warp and weft yarns, with at least some of the yarns of one layer 2 being interwoven with at least some of the yarns from the other layer 3 to form an interconnecting peripheral seam 4 which is integral to the woven structure of the two layers 2, 3 and which defines the periphery of the inflatable volume between the two layers 2, 3.

Regardless of the particular manner in which the two layers 2, 3 of fabric are interconnected around their peripheral seam 4, the layers are also interconnected by a plurality of internal seams 7, 8 within the periphery of the inflatable volume, each of which defines a respective interconnected region of the layers. In the particular arrangement illustrated in figure 1, there are a total of six such interconnecting internal seams 7, 8, each of which is generally linear. The seams 7, 8 are arranged generally parallel with one another and are spaced apart along the length of the airbag 1. As will thus be appreciated, the seams 7, 8 serve to define a series of generally parallel cells 9 upon inflation of the airbag, in a manner known *per se* in the field of airbags.

In the case of the layers 2, 3 being interconnected by a stitched peripheral seam 4, it is envisaged that the interconnected regions defined by the internal seams 7, 8 will each also be provided in a stitched form, in which fabric of the front and rear layers 2, 3 is superimposed and stitched together in the region of the seams 7, 8.

In the case of the layers 2, 3 being woven simultaneously via a one-piece-weaving technique such that they are interconnected by a peripheral seam 4 which is integral to the woven structure of the layers 2, 3, it is proposed that the interconnected regions defined by the internal seams 7, 8 will also be created by the same one-piece-weaving technique used to form the layers 2, 3 and the peripheral seam 4. In such an arrangement, the interconnected region defined by each internal seam 7, 8 will be therefore be formed by interweaving at least some of the yarns of one layer 2 with at least some of the yarns of the other layer 3, such that the resulting seams 7, 8 will each be integral to the woven structure of the two layers 2, 3.

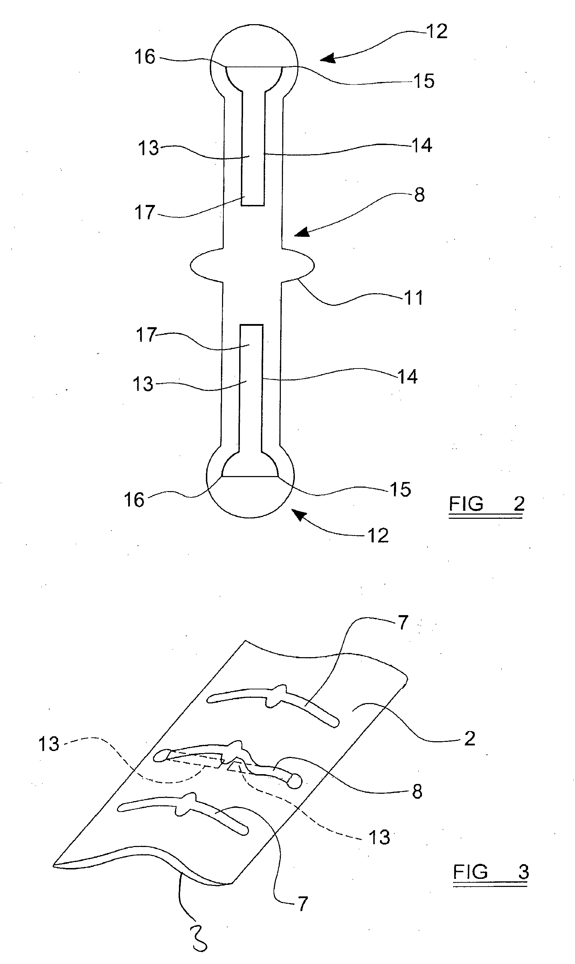

In the airbag arrangement illustrated in figure 1, four of the six interconnecting seams 7, 8 are designated purely as structural seams 7, whose sole function is to interconnect the two layers 2, 3 of fabric to define the aforementioned cells 9 upon inflation of the airbag 1. The remaining two interconnecting seams 8 (i.e. one on each side of the central axis 10 of the airbag as shown in figure 1) are specially configured to provide a dual function, as will now be described in more detail and with particular reference to figures 2 to 4.

Figure 2 shows one of the dual-function seams 8 in greater detail. As can be seen, the seam 8 is generally elongate in form. In common with the purely structural seams 7, the dual-purpose seam 8 has an enlarged central part 11. Upon inflation of the airbag 1, the seams 7, 8, and their enlarged central parts 11 will prevent inflation of the localised region of the airbag in which the seam interconnects the two layers of fabric 2, 3. The enlarged central part 11 interconnecting the two layers 2, 3 thus serves to define an uninflatable hinge to aid in the creation of a cavity in the inflated airbag, as will be described in more detail below.

As can also be seen in figure 2, the ends 12 of the dual-purpose seams 8 are somewhat enlarged, and in the particular embodiment illustrated are generally circular in form. It is to be noted that across the entire area of the enlarged ends 12, and indeed across the entire area of the seam 8 as a whole, the two layers 2, 3 of fabric are interconnected with one another; either by way of one-piece-weaving integration, or by way of stitching.

Once the seam 8 has been created via either of the techniques described above, two elongate pieces 13 are cut from spaced-apart positions towards opposite ends of the seam 8. More particularly, the elongate pieces 13 are cut from the seam 8 by the creation of a respective peripheral cut 14 which may be created through the interconnected fabric defining the seam 8 via the use of a cutting knife or laser cutting equipment. It is important to note, however, that each peripheral cut 14 begins at a point 15 located within a respective enlarged end 12 of the seam, from where the cut then runs inwardly towards the enlarged central part of the seam before returning to another point 16 located within the enlarged end 12 of the seam. The cut 14 thus does not extend between the two points 15, 16, and so between the two points 15, 16, the interconnected fabric of the two layers 2, 3 remains intact. These un-cut regions of the interconnected fabric extend generally across the middle of the respective enlarged ends 12 of the seam 8.

As will thus be appreciated, the above-described cutting process creates a pair of elongate cut-out pieces 13, which take the form of flaps connected to the enlarged ends of the seam 8. A central section of the seam between the two cut-out pieces 13 remains intact.

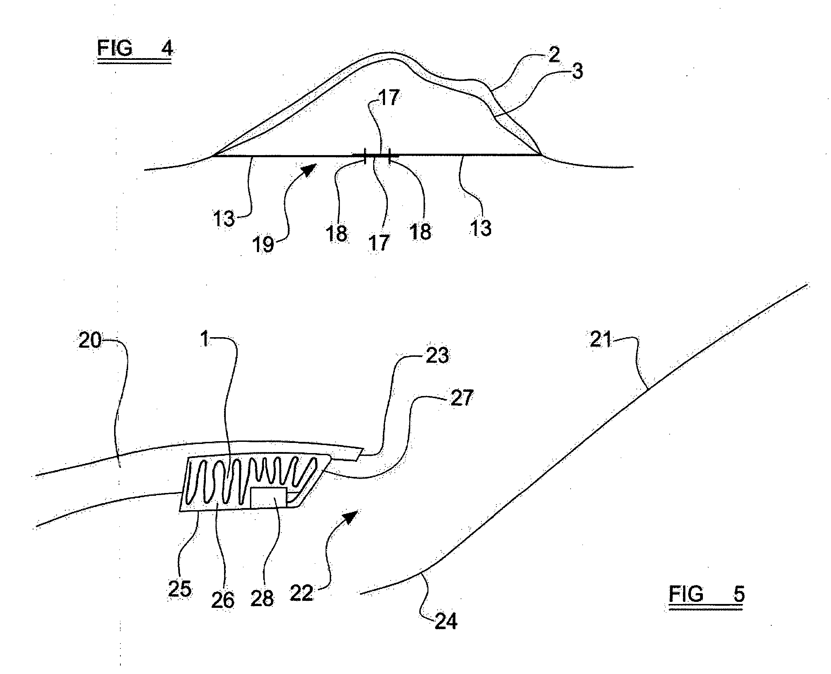

As shown in perspective view in figure 3, and in schematic form in figure 4, the fabric of the airbag is then manipulated to bring together the free ends 17 of the two cut-out pieces 13 created from each of the dual-purpose seams 8 interconnecting the layers 2, 3. As shown most clearly in figure 4, the free ends 17 of the cut-out pieces 13 of each seam 8 are aligned and superimposed, whereupon they are then fixedly connected to one another, for example by the creation of stitched seams 18 through the fabric of the pieces 13.

As illustrated most clearly in figure 4, the cut-out pieces 13 from each seam 8, when fixedly connected at their inner ends 17, create respective tethers 19 which are outside the inflatable volume defined between the two layers 2, 3 of fabric and which each extend between two points on the airbag 1 which are spaced from one another across a region of the inflatable volume. Because the two cut-out pieces 13 from which each tether 19 are formed are each shorter in length than half the length of the seams 8 from which they were cut, and also because their ends 17 are overlapped when connected, the tethers 19 are each significantly shorter than seams 8 from which they were cut and formed.

Because the tethers 19 have been formed as a cut-outs from the interconnected region of the two layers 2, 3 defined by the seam 8, then in the case of an airbag 1 created by stitching together the two layers 2, 3, the tethers will each comprise a double-thickness of fabric over their entire length, apart from in the central region where the ends 17 are connected which will comprise four thicknesses of fabric. This construction gives the tethers 19 very good strength properties. Of course, in the case of the airbag 1 being formed by a one-piece weaving technique in which the seams 8 comprise interwoven yarns from each layer 2, 3, then the tethers 19 will each comprise a weave of yarns taken from both layers 2, 3, thereby also giving the tethers very good strength properties.

The function of the tethers 19 during deployment of the airbag 1 will now be described with reference to figures 5 to 7.

Figure 5 shows the rear part of a hood or bonnet 20 (hereafter simply referred to as the hood), and the windscreen 21 of a motor vehicle fitted with a pedestrian airbag 1 embodying the present invention. It is envisaged that the pedestrian airbag arrangement will often be fitted to motor vehicles in combination with a hood-lifting pedestrian protection mechanism of a type known *per se*, in which the rear part of the hood 20 is lifted, for example by inflating bellows or airbags beneath the hood, in anticipation of a likely impact with a pedestrian so as to move the hood 20 away from the vehicle's engine. Figure 5 thus shows the hood 20 having been lifted by such a mechanism such that a small space 22 is defined between the rear edge 23 of the hood and the scuttle region 24 along the bottom edge of the windscreen 21. It is envisaged that the hood 20 will be lifted in this way either immediately prior to, or substantially simultaneously with actuation of the pedestrian airbag arrangement.

An airbag housing 25 is either mounted to the rear part of the hood 20, or is formed integrally with the rear part of the hood. Figure 5 shows the housing provided beneath the upper surface of the hood 20 such that the housing is normally hidden from view beneath the hood. The housing 25 defines a small inner chamber 26 within which the airbag 1 is initially packed as shown and has an opening 27 which is initially closed, for example by a rupturable door or seal. As will be appreciated, when the airbag 1 is folded and/or rolled for packaging within the housing 25, the tethers 19 will be packaged up with the airbag inside the housing.

An inflator, such as a gas generator 28 is provided within the housing 25 and is fluidly connected to the gas inlet 6 of the airbag 1. As will be appreciated, upon actuation of the gas generator 28, a large volume of inflating gas is very quickly directed into the interior volume of the airbag 1 defined between the layers 2, 3, and thus inflates the airbag 1 so that it deploys from the housing 25, through the opening 27 and towards the windscreen 21.

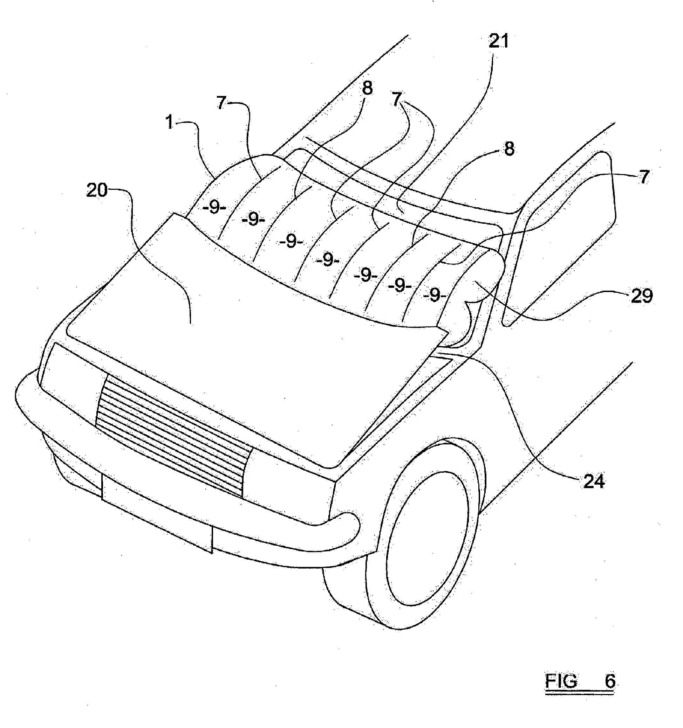

Figure 6 shows the airbag 1 in a deployed and fully inflated condition in which it extends generally across the entire width of the windscreen 21. As the inflating gas is driven rapidly into the inflatable volume of the airbag 1, the front and rear layers 2, 3 are driven apart from one another in the regions between the peripheral seam 4 and the interconnecting seams 7, 8, thus creating an inflated shape comprising the aforementioned cells 9 as illustrated.

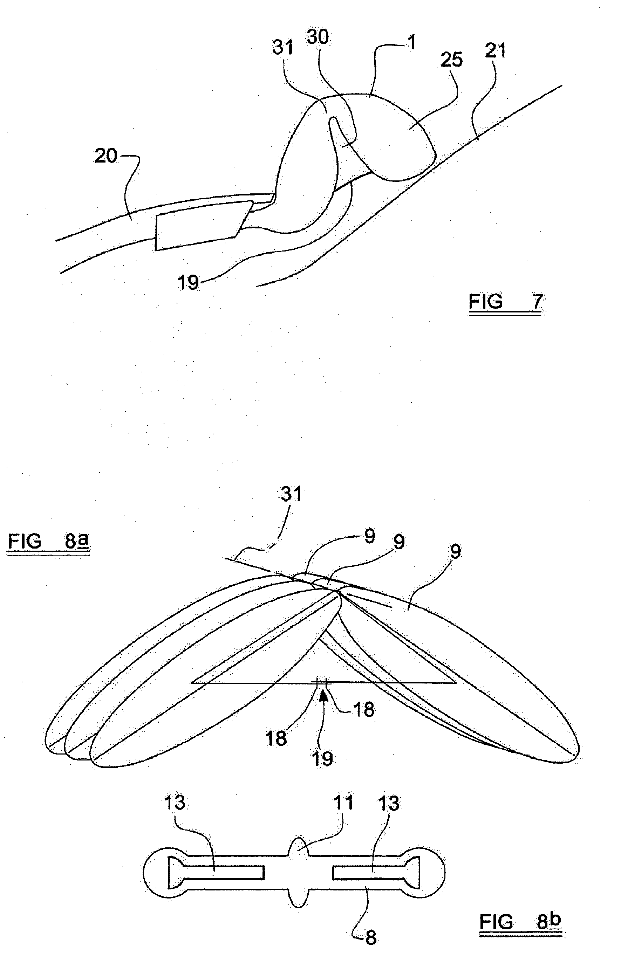

As the airbag 1 unfolds and deploys from the housing 25, the tethers 19 also unfold. The tethers 19 are configured, by virtue of their length being shorter than the length of the seams 8 from which they were cut, to become tensioned between the opposite ends of the seams 8 as the airbag 1 nears full inflation. Once the tethers 19 become tensioned in this manner, further inflation of the airbag 1 to the fully inflated condition illustrated is controlled by the tethers 19 which induce a degree of curvature to the inflated airbag, in a generally concave manner towards the windscreen as illustrated most clearly in figure 7. The tethers 19 thus control inflation of the airbag 1 such that the distal region 29 of the airbag (i.e. the region of the airbag remote from the inflator 28) is brought into contact with the windscreen 21, and such that the airbag as whole adopts an inflated condition in which a cavity 30 is defined in the form of a hollow in the overall inflated shape of the airbag, the cavity 30 being directed towards the windscreen 21.

It has been found that the above-mentioned inflation characteristic in which a cavity 30 is defined between the inflated airbag 1 and the windscreen 21 significantly improves the protection afforded to the head of a pedestrian striking the airbag 1. It is thought that this improvement in the level of protection results from the increase in distance through which energy can be absorbed by the airbag. It has also been found that the head of a pedestrian striking the airbag arrangement of the present invention tends to rebound from the airbag to a lesser degree than in the case of more conventional arrangements in which there is no cavity formed between the airbag and the windscreen.

Figures 8(a) and 8(b) show the configuration of the inflated cells 9 and the effect of each tether 19 becoming tensioned in more detail, and in relation to the configuration of the cut-out pieces 13 cut from the seam 8. It is to be noted that the interconnected region of the fabric layers 2, 3 remaining in the seam 8 after the cut-out pieces 13 have been cut and connected together to create the tether serves to define adjacent cells 9 of the inflated airbag 1. Additionally, the enlarged central part 11 of the seam, in which the fabric of the two layers 2, 3 remains interconnected defines a hinge which is not inflated by the inflating gas, thereby contributing to the effect of the tethers 19 in bending the airbag along a notional hinge line 31.

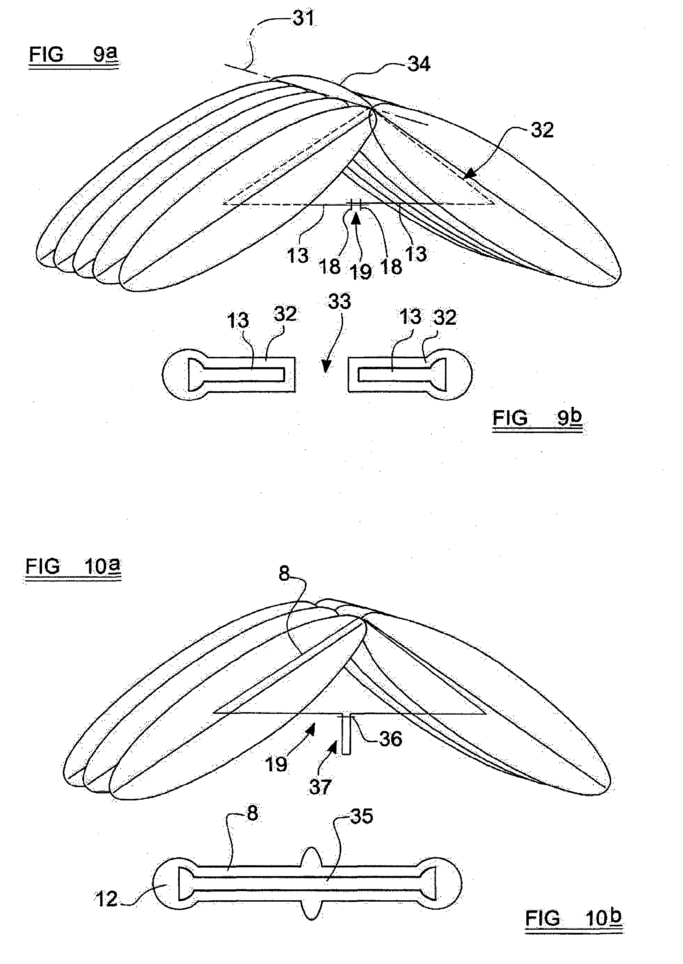

Figures 9(a) and 9(b) show the inflated configuration of an airbag 1 in accordance with another embodiment of the invention, in which the tethers 19 are formed from cut-out pieces taken from slightly differently configured interconnected regions of the airbag fabric. In this arrangement, the tethers 19 are each formed from two cut-out pieces 13 similar to those of the previously described embodiment illustrated in figures 8(a) and 8(b), and the pieces 13 are again connected at their ends 17 by stitching 18. However, in this arrangement, the cut-out pieces 13 are each removed from respective interconnected regions 32 in which the front and rear layers 2, 3 of the airbag are interconnected, either by one-piece-weaving integration or by stitching. As illustrated in in figure 9(b), the two interconnected regions 32 from which the pieces 13 for a single tether 19 are cut, are spaced from one another by an unconnected region 33 of the two fabric layers 2, 3. The two spaced apart interconnected regions of fabric 32 from which the tether pieces 13 are cut can therefore be considered to be generally similar in form to the opposing ends of the seam 8 from which the pieces are cut form the tethers of the embodiment shown in figures 8(a) and 8(b).

Upon inflation of the airbag shown in figures 9(a) and 9(b), the airbag will again develop into a series of inflatable cells 9 in a similar manner to the previously described embodiment. The two interconnected regions 32 will effectively each function as a seam between adjacent cells 9. Also, the tethers 19 will function in a generally identical manner to the tethers of the previous embodiment, in becoming tensioned during deployment of the airbag to bend the airbag along a notional hinge line 31. However, a notable difference in this arrangement arises from the fact that in the region 33 between the two interconnected seam regions 32, the front and rear layers 2, 3 of the airbag are unconnected. This means that the airbag will become inflated in this region. Assuming that all of the other internal seams 7 also have a similar central region in which the front and rear layers of the airbag are unconnected, an elongate chamber 34 will thus inflate along the notional hinge line 31 as illustrated in figure 9(a). This elongate chamber 34 can offer improved protection to a pedestrian in the event that part of the pedestrian (for example the pedestrian's head) strikes the hinged part of the deployed airbag.

Figures 10(a) and 10(b) show the inflated configuration of an airbag 1 in accordance with another embodiment of the invention, in which the tethers 19 are formed in a slightly different manner to the arrangements described above. As shown most clearly in figure 10(b), in this arrangement the tethers 19 are each formed from a single cut-out piece 35 which is cut from the respective seam 8, and which extends from one end region 12 of the seam 8 to the other end region 12 of the seam. The cut out piece 35 thus has a length which is equal to the aperture left behind in the seam 8 from where it has been cut. Therefore, in order to ensure that the tether 19 has an effective length which is shorter than the seam 8, the central region of the tether is then folded and stitched (at 36) to create a stitched fold 37. As will thus be appreciated, the resulting tethers 19 perform in a substantially identical manner to the two-piece tethers of the arrangement depicted in figures 8(a) and 8(b) upon deployment and inflation of the airbag 1.

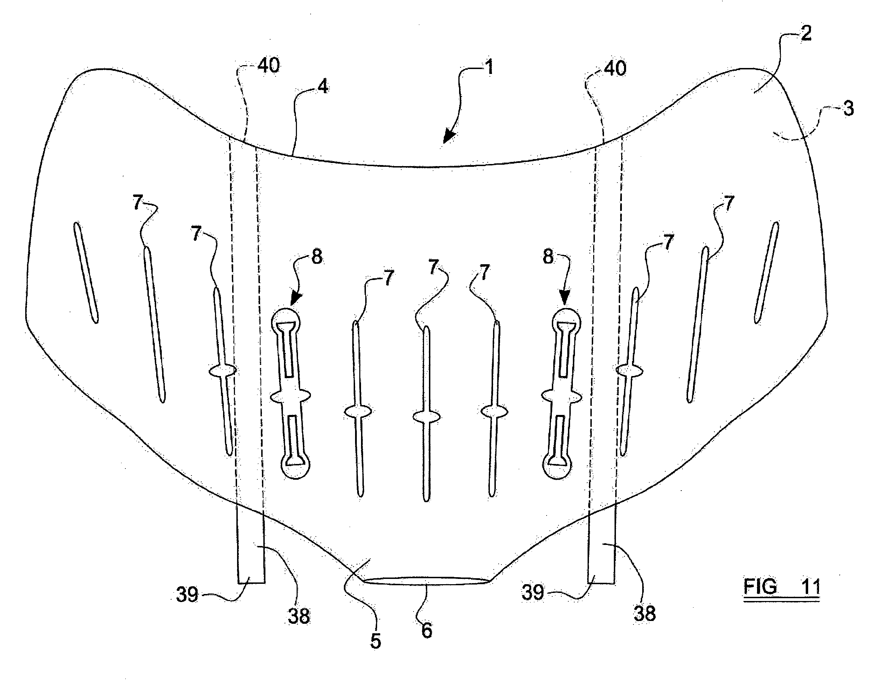

Turning now to consider figures 11 to 13, a modified airbag 1 in accordance with another embodiment of the invention will now be described.

Figure 11 shows an alternative configuration of airbag 1 in a generally similar view to the one shown in figure 1. The airbag 1 again has front and rear layers 2, 3 of fabric which can either be interconnected via a peripheral interwoven seam 4 arising from a one-piece-weaving technique, or via a stitched peripheral seam. In a similar manner to the airbag shown in figure 1, the front and rear layers 2, 3 of fabric are again interconnected by a plurality of internal seams 7, 8 within the periphery of the inflatable volume defined between the layers 2, 3. The internal seams include a number of purely structural seams 7, and a pair of spaced apart dual purpose seams 8 from which tethers 19 are formed in the same manner as described above with reference to figures 2 to 4.

Apart from the somewhat different overall shape of the fabric layers 2, 3 used to create the airbag 1 of figure 11, the other main difference between this airbag and the airbag shown in figures 1 to 7, is that a pair of additional tethers are provided in the form of elongate straps 38. Each strap 38 has a proximal end 39 generally adjacent the gas inlet 6 of the airbag, and a distal end 40 which is fixedly connected to the airbag 1 at a position remote from the gas inlet 6. In the particular arrangement illustrated, the distal ends 40 of the straps 38 are connected to the airbag 1 at the peripheral seam 4, and are preferably incorporated into the seam itself. The straps 38 extend beneath the airbag 1 as viewed from above in figure 11, and are thus provided across the rear layer of fabric 3. Both straps 38 are thus outside the inflatable volume of the airbag. The proximal ends 39 of the straps 38 are provided for connection to an anchorage which is fixed relative to part of a motor vehicle adjacent the windscreen, as will be described in more detail below.

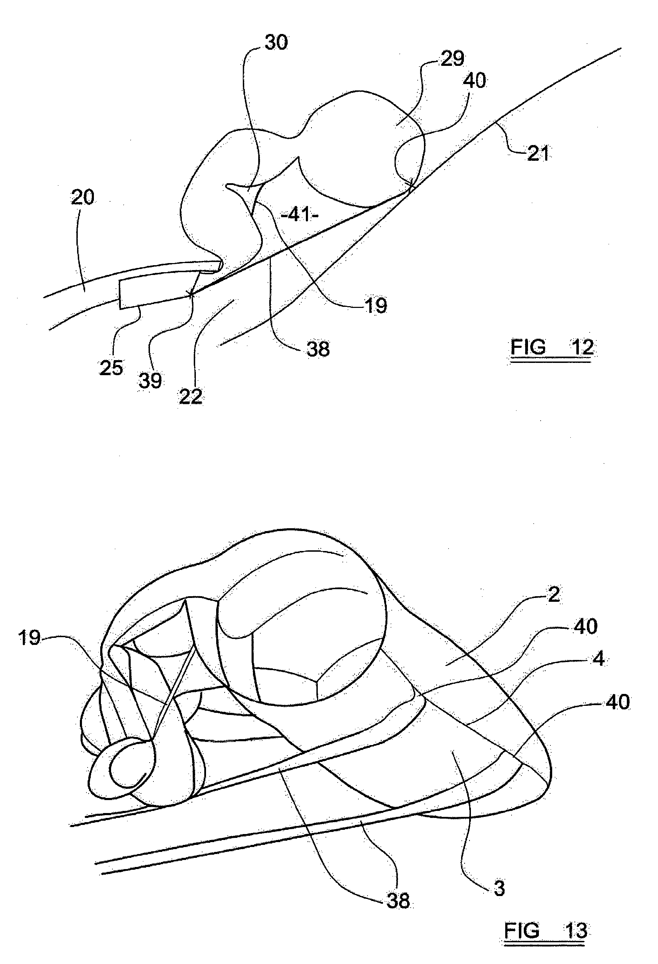

Figure 12 shows the airbag in cross-sectional view in its inflated condition across the windscreen 21 of the motor vehicle. In this arrangement, the proximal ends 39 of the straps 38 are fixedly connected to the airbag housing 25 beneath the rear part of the hood 20. The housing 25 thus forms a secure anchorage for the straps, the anchorage being fixed relative to the structure of the hood 20.

As the airbag unfolds and deploys from the housing 20, the cut out tethers 19 and the straps 38 also unfold. The tethers 19 perform as described above in connection with the embodiment of figures 1 to 7 and hence become tensioned as the airbag nears full inflation, thereby inducing a degree of curvature to the inflated airbag in a generally concave manner towards the windscreen 21, and thus defining a cavity 30 directed towards the windscreen.

Additionally, the straps 38 are also configured, particularly in terms of their length between their proximal and distal connections 39, 40 to the housing and airbag respectively, to become tensioned as the airbag nears full inflation. Once the straps 38 become tensioned in this manner between the anchorage provided by the housing 25 and the airbag itself, further inflation of the airbag 1 to the fully inflated condition illustrated is controlled by the straps 38 which contribute to the creation of a degree of curvature to the inflated airbag, in a generally concave manner towards the windscreen.. The straps 38 thus aid in the control of the inflating airbag such that the distal region of the airbag is brought into contact with the windscreen along with the distal ends 40 of the straps, and such that the airbag as whole adopts an inflated condition in which a larger cavity 41 (incorporating the cavity defined by the tethers 19) is defined between the airbag and the windscreen. As illustrated, the straps 38 are preferably connected to the housing 25 at their proximal ends 39 at positions on the housing which are located between the opening 22 and the windscreen 21 of the vehicle so as not to impede deployment of the airbag through the opening. Figure 13 illustrates the inflated configuration of the airbag in more detail.

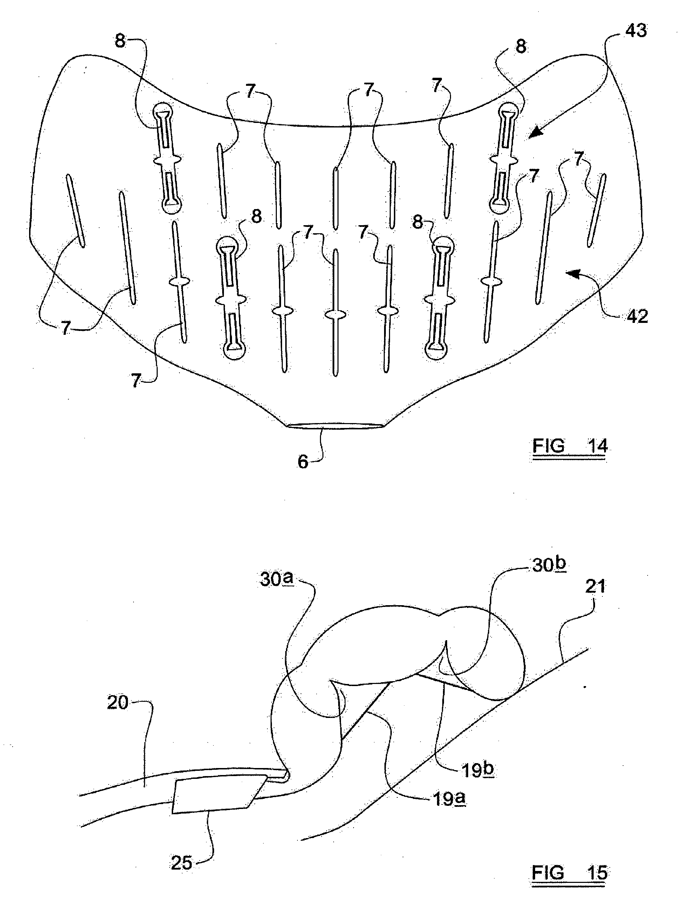

Turning now to consider figures 14 and 15, another alternative embodiment of the present invention will be described.

Figure 14 shows an airbag of similar shape to the airbag illustrated in figure 11. However, the airbag shown in figure 14 does not include the additional tether straps. As will be noted, however, this airbag arrangement has two rows of internal seams interconnecting the front and rear layers of fabric 2, 3. A proximal row 42 of seams 7, 8 is located near to the gas inlet aperture 6 of the airbag and has a configuration substantially identical to the configuration of seams provided in the airbag of figure 11. Accordingly, the proximal row 42 of seams includes a plurality of purely structural seams 7, and a pair of dual-purpose seams 8 from which respective tethers 19 will be formed in the manner described above. An additional distal row 43 of seams is also provided, comprising a plurality of purely structural seams 7 located between a pair of end dual-purpose seams 8 from which additional tethers 19 will be formed as described above. The distal row 43 of seams is spaced from the gas inlet aperture by the proximal row 42.

As illustrated in figure 14, each dual-purpose seam 8 of the distal row 43 is spaced slightly outboard from the adjacent dual-purpose seams 8 of the proximal row 42. Each seam 8 of the distal row thus forms a pair with the adjacent seam of the proximal row 42.

As indicated above, each of the dual purpose seams 8 forms the basis for the creation of a respective tether 19. In the particular arrangement illustrated, the tethers 19 will each be formed from a single cut-out piece 35 which is folded and stitched as illustrated in figure 10(a).

Figure 15 shows the configuration of the resulting airbag upon deployment across the windscreen 21 of a motor vehicle. As will be noted, the tethers 19a created from the seams 8 of the proximal row 42 become tensioned as the airbag inflates and thus control inflation of the airbag such that a proximal cavity 30a is created in the airbag, facing the windscreen 21. Similarly, the tethers 19b created from the seams 8 of the distal row 43 also become tensioned so as to create a distal cavity 30b in the airbag, facing the windscreen.

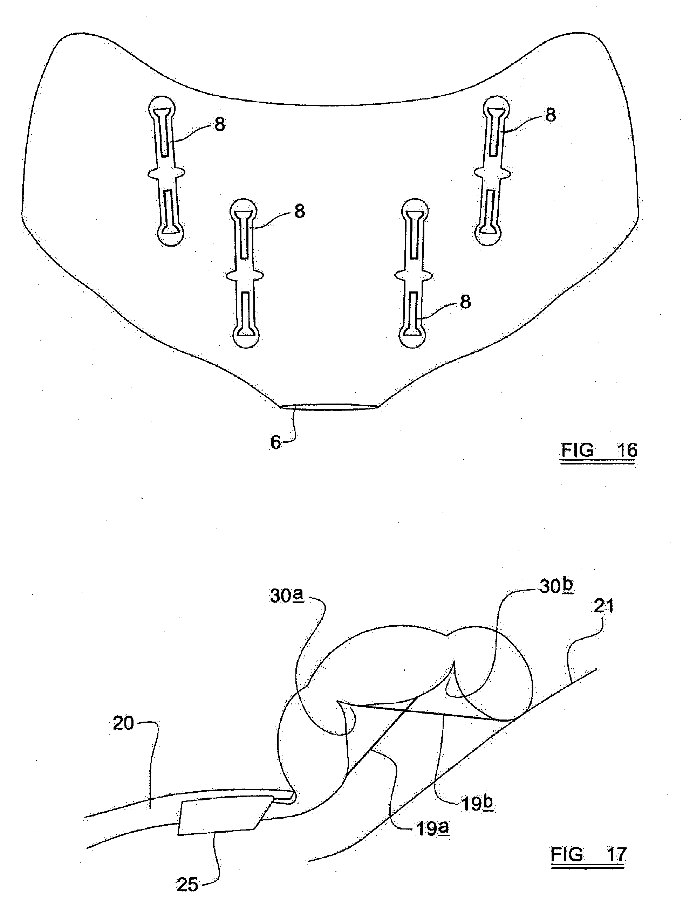

Figure 16 shows an airbag of similar configuration to the airbag shown in figure 14. In the particular airbag shown in figure 16, there are provided a total of four dual-purpose seams 8, of generally similar configuration to the dual-purpose seams of the airbag shown in figure 14. Thus, it will be noted that the seams 8 are provided in two pairs, each pair comprising a proximal seam 8 located relatively close to the gas inlet 6 and a distal seam 8 located further away from the gas inlet 6. The airbag is shown in figure 16 without any additional structural seams between the front and rear layers 2, 3 of the airbag. However, it is to be appreciated that such seams could also be provided.

In important distinction between the airbag of figure 16 and the airbag of figure 14 is that in the airbag of figure 16 the dual-purpose seams 8 of each pair overlap with one another. Tethers 19 are formed from the seams 8 in the manner described above, and it will thus be noted that the tethers 19 of each pair also, therefore, overlap in the sense illustrated in figure 16.

Figure 17 shows the configuration of the resulting airbag upon deployment across the windscreen 21 of a motor vehicle. As will be noted, the tethers 19a created from the proximal seams 8 nearest to the gas inlet 6 of the airbag become tensioned as the airbag inflates and thus control inflation of the airbag such that a proximal cavity 30a is created in the airbag, facing the windscreen 21. Similarly, the tethers 19b created from the distal seams 8 remote from the gas inlet 6 also become tensioned so as to create a distal cavity 30b in the airbag, facing the windscreen. It can be seen, however, that in this arrangement the proximal and distal tethers 19a, 19b of each pair become tensioned in positions in which they cross one another, as viewed along the length of the airbag (transversely across the vehicle's windscreen). It is proposed that to further improve the stability of the airbag in its inflated configuration, the proximal and distal tethers 19a, 19b could be connected to one another in the region where they are expected to cross on deployment of the airbag. It will be noted from figure 16 that the tethers 19a, 19b of each pair are formed from seams 8 which are spaced apart from one another relative to the width of the vehicle. Connecting the tethers in this manner is therefore believed to add considerable stability to the inflated airbag, because it will mean that the tension created in the tethers 19a, 19b on deployment of the airbag across the windscreen 21 has a component in the vehicle's transverse (widthwise) direction as well as the vehicle's longitudinal (lengthwise) direction.

Whilst the present invention has been described above with specific reference to pedestrian airbags, it is to be appreciated that the invention is not restricted to pedestrian airbags, and could indeed find application in other types of airbags for motor vehicles such as, for example, driver airbags, passenger airbags, side-impact airbags and inflatable curtains.

It is to be appreciated that whilst the airbag of the present invention has been described above with reference to particular embodiments in the form of pedestrian airbags designed for inflation over or across the windscreen of a motor vehicle, the present invention could be used instead in various other types of airbag such as, for example, driver's airbags, passenger airbags, side impact airbags, or inflatable curtains.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. An inflatable airbag (1) for a motor vehicle safety arrangement, the airbag having: two layers of flexible material (2,3) interconnected to define an inflatable volume between the layers for the receipt of inflating gas; and a tether (19) outside said inflatable volume and which extends between two points (12) on the airbag, said points (12) being spaced from one another across a region of the inflatable volume; the tether (19) being configured to become tensioned between said points (12) upon deployment of the airbag to thereby control inflation of the airbag such that the airbag adopts an inflated configuration defining a cavity (30); the airbag being **characterised in that** said tether (19) is formed from a cut-out from an interconnected region (8) of said layers (2,3) of the airbag; the tether (19) having a length which is shorter than the length of the interconnected region (8) from which it is cut and thereby being configured to become tensioned between the two points (12) at opposite ends of the interconnected region (8).

2. An airbag according to claim 1, wherein said interconnected region (8) of said layers is provided within the periphery (4) of said inflatable volume.

3. An airbag according to claim 1 or claim 2, wherein said layers (2,3) are superimposed and stitched together in said interconnected region (8).

4. An airbag according to claim 1 or claim 2, wherein said layers (2,3) are fabric and are each woven from respective yarns; yarns of one layer (2) being interwoven with yarns of the other layer (3) in said interconnected region (8).

5. An airbag according to claim 4, wherein said inflatable volume is defined by a peripheral seam (4) created by interweaving yarns of one said layer (2) with yarns of the other said layer (3).

6. An airbag according to claim 4 or claim 5, wherein said interconnected region (8) and said peripheral seam (4) are both formed via a one-piece-weaving technique in which the two layers (2,3) of the airbag are woven simultaneously.

7. An airbag according to any preceding claim, wherein said tether (19) is formed as a single piece (35) cut out from said interconnected region (8) of the layers (2,3).

8. An airbag according to claim 7, said tether having a stitched-fold (37) formed in said single piece (35).

9. An airbag according to any one of claims 1 to 6, wherein said tether (19) is formed from a pair of pieces (13) cut from respective spaced-apart positions within said interconnected region (8), said pieces being fixedly connected (17,18) to one another.

10. An airbag according to any preceding claim having a plurality of said tethers (19).

11. An airbag according to any preceding claim having a pair of said tethers (19a, 19b), the tethers being connected to one another in a region where they are expected to cross on deployment.

12. A pedestrian airbag arrangement comprising a motor vehicle having a windscreen (21), the arrangement having an airbag (1) according to any preceding claim configured for said deployment upon inflation so as to extend over or across at least part of the windscreen (21), wherein said tether (19) is configured to control inflation of the airbag such that said cavity (30) is directed towards the windscreen (21).

13. A pedestrian airbag arrangement according to claim 12, further comprising an additional tether (38) outside the inflatable volume of the airbag, the additional tether (38) being fixedly connected between the airbag and an anchorage (39) which is fixed relative to part of the motor vehicle adjacent the windscreen (21).

14. A pedestrian airbag arrangement according to claim 13, wherein said additional tether (38) is configured to become tensioned between said anchorage (39) and said airbag upon said deployment of the airbag to thereby control inflation of the airbag such that the airbag adopts an inflated configuration defining a cavity (41) between the airbag and the windscreen.

15. A pedestrian airbag arrangement according to claim 13 or claim 14, wherein said additional tether (38) is configured to control inflation of the airbag upon deployment such that a distal region (29) of the inflated airbag remote from the anchorage (39) is urged against said windscreen (21) by the tension in the tether (38).

## Patentansprüche

1. Aufblasbarer Airbag (1) für Sicherheitseinrichtung eines Kraftfahrzeugs, wobei der Airbag aufweist: zwei Schichten aus flexiblem Material (2, 3), die miteinander verbunden sind und ein füllbares Volumen zwischen den Schichten zur Aufnahme von Füllgas definieren; sowie eine Haltevorrichtung (19) außerhalb des füllbaren Volumens und die zwischen zwei Stellen (12) an dem Airbag verläuft, wobei die Stellen (12) über einen Bereich des füllbaren Volumens hinweg einen Abstand zueinander aufweisen; wobei die Haltevorrichtung (19) so eingerichtet ist, dass sie beim Entfalten des Airbags zwischen den Stellen (12) gespannt wird, um dadurch das Aufblasen des Airbags zu steuern, sodass der Airbag eine aufgeblasene Gestalt annimmt, die einen Hohlraum (30) definiert; wobei der Airbag **dadurch gekennzeichnet ist, dass** die Haltevorrichtung (19) aus einem Ausschnitt aus einem verbundenen Bereich (8) der Schichten (2, 3) des Airbags geformt ist; wobei die Haltevorrichtung (19) eine Länge aufweist, die kürzer als die Länge des verbundenen Bereichs (8) ist, aus dem sie herausgeschnitten ist und dadurch so ausgelegt ist, dass sie zwischen den beiden Stellen (12) an gegenüberliegenden Enden des verbundenen Bereichs (8) gespannt wird.

2. Airbag nach Anspruch 1, wobei der verbundene Bereich (8) der Schichten in dem Rand (4) des füllbaren Volumens angeordnet ist.

3. Airbag nach Anspruch 1 oder Anspruch 2, wobei die Schichten (2, 3) in dem verbundenen Bereich (8) übereinandergelegt und zusammengenäht sind.

4. Airbag nach Anspruch 1 oder Anspruch 2, wobei die Schichten (2, 3) Stoff sind und jeweils aus jeweiligen Garnen gewebt sind; wobei Garne einer Schicht (2) mit Garnen der anderen Schicht (3) in dem verbundenen Bereich (8) verwebt sind.

5. Airbag nach Anspruch 4, wobei das füllbare Volumen durch eine Umfangsnaht (4) definiert ist, die durch Verweben von Garnen der einen Schicht (2) mit Garnen der anderen Schicht (3) erzeugt ist.

6. Airbag nach Anspruch 4 oder Anspruch 5, wobei der verbundene Bereich (8) und die Umfangsnaht (4) beide über ein Einteilwebverfahrens geformt sind, bei dem die beiden Schichten (2, 3) des Airbags gleichzeitig gewebt werden.

7. Airbag nach einem vorhergehenden Anspruch, wobei die Haltevorrichtung (19) als einteiliges Teil (35) geformt ist, das aus dem verbundenen Bereich (8) der Schichten (2, 3) herausgeschnitten ist.

8. Airbag nach Anspruch 7, wobei die Haltevorrichtung eine genähte Falte (37) aufweist, die in dem einteiligen Teil (35) geformt ist.

9. Airbag nach einem der Ansprüche 1 bis 6, wobei die Haltevorrichtung (19) aus einem Paar Teile (13) geformt ist, die aus jeweiligen beabstandeten Stellen in dem verbundenen Bereich (8) herausgeschnitten sind, wobei die Teile fest miteinander verbunden sind (17, 18).

10. Airbag nach einem vorhergehenden Anspruch, der eine Mehrzahl der Haltevorrichtungen (19) aufweist.

11. Airbag nach einem vorhergehenden Anspruch, der ein Paar der Haltevorrichtungen (19a, 19b) aufweist, wobei die Haltevorrichtungen in einem Bereich miteinander verbunden sind, in dem sie sich beim Entfalten erwartungsgemäß kreuzen werden.

12. Fußgängerairbaganordnung, die ein Kraftfahrzeug mit einer Windschutzscheibe (21) umfasst, wobei die Anordnung einen Airbag (1) nach einem vorhergehenden Anspruch aufweist, der zur Entfaltung beim Aufblasen ausgelegt ist, damit er sich über oder quer über zumindest einen Teil der Windschutzscheibe (21) erstreckt, wobei die Haltevorrichtung (19) so eingerichtet ist, dass sie das Aufblasen des Airbags so steuert, dass der Hohlraum (30) in Richtung der Windschutzscheibe (21) gerichtet ist.

13. Fußgängerairbaganordnung nach Anspruch 12, ferner umfassend eine zusätzliche Haltevorrichtung (38) außerhalb des füllbaren Volumens des Airbags, wobei die zusätzliche Haltevorrichtung (38) fest zwischen dem Airbag und einer Verankerung (39) verbunden ist, die bezogen auf einen Teil des Kraftfahrzeugs angrenzend an die Windschutzscheibe (21) fest ist.

14. Fußgängerairbaganordnung nach Anspruch 13, wobei die zusätzliche Haltevorrichtung (38) so ausgelegt ist, dass sie beim Entfalten des Airbags zwischen der Verankerung (39) und dem Airbag gespannt wird, um dadurch das Aufblasen des Airbags zu steuern, sodass der Airbag eine aufgeblasene Gestalt annimmt, die einen Hohlraum (41) zwischen dem Airbag und der Windschutzscheibe definiert.

15. Fußgängerairbaganordnung nach Anspruch 13 oder Anspruch 14, wobei die zusätzliche Haltevorrichtung (38) so ausgelegt ist, dass sie das Aufblasen des Airbags beim Entfalten so steuert, dass ein distaler Bereich (29) des aufgeblasenen Airbags entfernt von der Verankerung (39) durch die Spannung in der Haltevorrichtung (38) gegen die Windschutzscheibe (21) gedrückt wird.

## Revendications

1. Airbag gonflable (1) pour agencement de sécurité de véhicule à moteur, l'airbag comportant : deux couches de matériau flexible (2, 3) interconnectées pour définir un volume gonflable entre les couches pour la réception de gaz de gonflage ; et une attache (19) à l'extérieur dudit volume gonflable et qui s'étend entre deux points (12) sur l'airbag, lesdits points (12) étant espacés l'un de l'autre à travers une zone du volume gonflable ; l'attache (19) étant configurée pour passer à un état tendu entre lesdits points (12) lors du déploiement de l'airbag afin de contrôler ainsi le gonflage de l'airbag, de sorte que l'airbag adopte une configuration gonflée définissant une cavité (30) ; l'airbag étant **caractérisé en ce que** ladite attache (19) est formée à partir d'une découpe dans une zone interconnectée (8) desdites couches (2, 3) de l'airbag ; l'attache (19) présentant une longueur qui est inférieure à la longueur de la zone interconnectée (8) dans laquelle elle est coupée et étant ainsi configurée pour passer à un état tendu entre les deux points (12) à des extrémités opposées de la zone interconnectée (8).

2. Airbag selon la revendication 1, dans lequel ladite zone interconnectée (8) desdites couches se trouve dans la périphérie (4) dudit volume gonflable.

3. Airbag selon la revendication 1 ou la revendication 2, dans lequel lesdites couches (2, 3) sont superposées et piquées ensemble dans ladite zone interconnectée (8).

4. Airbag selon la revendication 1 ou la revendication 2, dans lequel lesdites couches (2, 3) sont du tissu et sont chacune tissées avec des fils respectifs ; des fils d'une couche (2) étant entrelacés avec des fils de l'autre couche (3) dans ladite zone interconnectée (8).

5. Airbag selon la revendication 4, dans lequel ledit volume gonflable est défini par une couture périphérique (4) créée en entrelaçant des fils d'une dite couche (2) avec des fils de l'autre dite couche (3).

6. Airbag selon la revendication 4 ou la revendication 5, dans lequel ladite zone interconnectée (8) et ladite couture périphérique (4) sont toutes les deux formées par une technique de tissage une pièce dans laquelle les deux couches (2, 3) de l'airbag sont tissées simultanément.

7. Airbag selon une quelconque revendication précédente, dans lequel ladite attache (19) est formée en tant qu'unique pièce (35) découpée dans ladite zone interconnectée (8) des couches (2, 3).

8. Airbag selon la revendication 7, ladite attache comportant un pli piqué (37) formé dans ladite unique pièce (35).

9. Airbag selon l'une quelconque des revendications 1 à 6, dans lequel ladite attache (19) est formée à partir d'une paire de pièces (13) coupées dans des positions espacées respectives dans ladite zone interconnectée (8), lesdites pièces étant reliées (17, 18) fixement l'une à l'autre.

10. Airbag selon une quelconque revendication précédente, comportant une pluralité desdites attaches (19).

11. Airbag selon une quelconque revendication précédente, comportant une paire desdites attaches (19a, 19b), les attaches étant reliées l'une à l'autre dans une zone où il est prévu qu'elles se croisent lors du déploiement.

12. Agencement d'airbag pour piétons comprenant un véhicule à moteur comportant un pare-brise (21), l'agencement comportant un airbag (1) selon une quelconque revendication précédente configuré pour ledit déploiement lors du gonflage de manière à s'étendre sur ou en travers d'au moins une partie du pare-brise (21), dans lequel ladite attache (19) est configurée pour contrôler le gonflage de l'airbag de sorte que ladite cavité (30) est dirigée vers le pare-brise (21).

13. Agencement d'airbag pour piétons selon la revendication 12, comprenant en outre une attache supplémentaire (38) à l'extérieur du volume gonflable de l'airbag, l'attache supplémentaire (38) étant reliée fixement entre l'airbag et un ancrage (39) qui est fixé par rapport à une partie du véhicule à moteur adjacente au pare-brise (21).

14. Agencement d'airbag pour piétons selon la revendication 13, dans lequel ladite attache supplémentaire (38) est configurée pour passer à un état tendu entre ledit ancrage (39) et ledit airbag lors dudit déploiement de l'airbag afin de contrôler ainsi le gonflage de l'airbag de sorte que l'airbag adopte une configuration gonflée définissant une cavité (41) entre l'airbag et le pare-brise.

15. Agencement d'airbag pour piétons selon la revendication 13 ou la revendication 14, dans lequel ladite attache supplémentaire (38) est configurée pour contrôler le gonflage de l'airbag lors du déploiement de sorte qu'une zone distale (29) de l'airbag gonflé éloignée de l'ancrage (39) est pressée contre ledit pare-brise (21) par la tension dans l'attache (38).
